# EUROPEAN PATENT SPECIFICATION

(11) **EP 3 394 422 B1**
(45) Date of publication and mention of the grant of the patent: **14.02.2024**
(21) Application number: 15816785.8
(22) Date of filing: 21.12.2015
(51) Int. Cl.: F02N 11/08, B60W 10/26, H02J 7/14, B60W 10/06, H02J 7/00, H02J 9/00

(54) **CONTROL METHOD OF THE POWER MANAGEMENT SYSTEM IN A VEHICLE PROVIDED WITH TWO BATTERIES**
STEUERVERFAHREN EINES LEISTUNGSVERWALTUNGSYSTEMS IN EINEM MIT ZWEI BATTERIEN AUSGESTATTENEN FAHRZEUG
MÉTHODE DE GESTION D'UN SYSTÈME DE PUISSANCE DANS UN VÉHICULE POURVU DE DEUX BATTERIES

(43) Date of publication of application: 31.10.2018
(73) Proprietor: Volvo Truck Corporation, 405 08 Göteborg (SE)
(72) Inventor: CARRESJÖ, Erik, 442 72 Kärna (SE); RYDÉN, Lasse, 415 06 Göteborg (SE)
(74) Representative: Valea AB
(86) International application number: PCT/EP2015/080878
(87) International publication number: WO 2017/108086

(56) References cited:
- EP-A1- 2 299 556
- EP-A2- 0 937 610
- WO-A2-01/39350
- WO-A2-03/105330
- DE-A1- 19 628 222
- FR-A1- 2 736 768
- GB-A- 2 255 243
- GB-A- 2 510 821

## Description

### TECHNICAL FIELD

The invention relates to a method for controlling a power management system in a vehicle operated by a combustion engine. The method comprises: supplying electric energy to a start device for said combustion engine by means of a start battery unit; supplying electric energy to a number of electric consumers in the vehicle including components which are crucial for allowing starting of said combustion engine, by means of a second battery unit; and charging said second battery unit during operation of the combustion engine by means of an alternator which is associated with said combustion engine.

The invention also relates to a power management system in a vehicle operated by a combustion engine. The power management system comprises a start battery unit for supplying electric energy to a start device for said combustion engine, a second battery unit for supplying electric energy to electric consumers of the vehicle including components which are crucial for allowing starting of said combustion engine, and an alternator for charging said second battery unit during operation of the combustion engine.

The invention can be applied in heavy-duty vehicles, such as trucks, buses and construction equipment sich as wheel loaders, and also other working machines such as articulated haulers and excavators. Although the invention will be described below with respect to a truck, the invention is not restricted to this particular vehicle, but as mentioned may also be used in other vehicles.

### BACKGROUND

In the field of vehicles, in particular trucks and other commercial transport vehicles, it is important to provide solutions for a supply of electric power so as to be able to start a vehicle engine in a reliable manner. Obviously, this requirement exists so as to guarantee that the vehicle can be started and operated in virtually all conditions.

Also, in particular as regards heavy transport vehicles for commercial use, it is necessary to provide a supply of electric power to certain electric consumers within a vehicle compartment in which the driver may rest and sleep. Such electric consumers may for example be in the form of heating and ventilation devices, food storage devices etc. This need to supply a living compartment in a transport vehicle with electric power has been emphasized in recent years due to the fact that many transport vehicles are operated during relatively long journeys. This means that the driver of a vehicle needs to use the living compartment during a relatively long period. This puts demands on the electric power system of the vehicle.

For the reasons above, it is necessary to provide a reliable and sufficiently dimensioned electric power system in a vehicle. Normally, such a system comprises a rechargeable energy storage system such as a conventional battery pack. In this manner, the necessary electric power to the vehicle can be provided in the event that the vehicle engine is not running. This is both during starting of the engine and also for the electric components which are associated with the living compartment of the vehicle.

A traditional way of providing electric power in a vehicle is to use a single energy storage system comprising a rechargeable battery unit which is used both for supplying electric energy to a start motor during cranking of the vehicle engine, and also for supplying electric energy to the electric components which are needed in the living compartment of the vehicle. In this regard, it should be noted that supplying electric energy to a starter motor only is not always sufficient to actually start the combustion engine. In fact, there is a number of other components in a modern vehicle which are crucial in order to start a combustion engine, such as an electronic control unit for the combustion engine, an electronic control unit for vehicle management control, electronic sensor driver units etc. Consequently, certain electronic components must be supplied with electric power in order to enable starting of the vehicle by means of a starter motor.

For this reason, it is important to note that if the available electric energy in the battery pack is not sufficient for operating these crucial control units and similar components, the engine cannot be started, even if the starter motor as such is working properly.

This situation is particularly severe due to the fact that the vehicle has the above-mentioned electric consumers associated with the living compartment of the vehicle, which will also need electric energy and which may drain the battery pack of electric energy.

Due to the above-mentioned potential situation with insufficient electric energy to start the engine, solutions have been proposed which involve two separate rechargeable energy storage systems, i.e. comprising two separate battery units. One battery unit could then be used for operating the start motor and another battery unit could be used for operating the living compartment components including the above-mentioned crucial components, such as the electronic control units for the combustion engine and vehicle management, which are also necessary for starting the engine.

As mentioned above, in order to start the vehicle, electric power needs to be supplied to both the start motor and to the crucial control units and associated components. This may be problematic when the crucial control units and the start motor are powered by two separate battery units. If the battery pack powering the crucial components is fully discharged, the combustion engine cannot be started even if the battery pack for the starter motor contains sufficient electric charge for cranking the engine.

Also, the various components necessary for the driver's living compartment are still necessary to supply with electric energy, by either one or both of the two battery units. The fact that these consumers drain the battery packs of electric energy when the driver is using the living compartment can add to the problem.

In summary, even if two separate battery units are used, as described above, there may occur situations where one of the battery units is completely discharged and the vehicle cannot be started. This is obviously a problem.

The patent document US 6275001 discloses a dual-battery system for a vehicle, which comprises a starter battery and a vehicle electrical system battery. The batteries are arranged so that the electrical system battery is used when the vehicle is stationary and during normal driving. When the starting of the vehicle motor occurs, the starter battery is connected. However, this known system does not address the problem which may occur in situations where an electrical system battery is completely discharged and the vehicle cannot be started.

According to its abstract, FR2736768A1 relates to a device for supplying electrical charge of a motor vehicle, comprising a starter battery connected to the starter of the engine, a service battery, an alternator and a charge management system connecting the two batteries and the alternator to the electrical loads of the vehicle, wherein the charge management system consists of a combination of at most two switches out of three, the first of which connects the starter battery and engine loads, the second of which connects the engine loads and the alternator, and the third of which connects the alternator and the service battery which is further connected to the service loads.

According to its abstract, EP2299556A1 relates to a battery charging and electrical energy delivery system that allows for separation of charging of a battery and delivery of electrical energy to a first set of consumers. The battery may be charged via a first path for connecting the battery with an energy source, while electrical energy may be supplied via a second path (separate from the first path) from the energy source to the first set of consumers. The first set of consumers may also be powered by the battery via third path, e.g. if the energy source is off. A control unit is adapted to control the supply of electrical energy along said first, second and third paths in response to a detected state of the energy source. A battery operated system including the battery charging and electrical energy delivery system is also provided.

### SUMMARY

An object of the invention is to provide a method and a system which uses two battery units, i.e. a start battery unit and a second battery unit, and in which it can be secured that a vehicle can be started and operated even if the second battery unit which normally supplies electric power to certain crucial components such as vehicle and engine control units is discharged.

According to a first aspect, the object is achieved by a method according to claim 1. Thus, there is provided a method for controlling a power management system in a vehicle operated by a combustion engine, said method comprising: supplying electric energy to a start device for said combustion engine by means of a start battery unit; supplying electric energy to a number of electric consumers in the vehicle including components which are crucial for allowing starting of said combustion engine, by means of a second battery unit; and charging said second battery unit during operation of the combustion engine by means of an alternator which is associated with said combustion engine. Furthermore, the method comprises: checking, before starting of the combustion engine by means of said start device, whether the state of charge of said second battery unit is lower than a predetermined value, and, if this is the case, accepting an input signal for actuation of said start device if the state of charge of said start battery unit is higher than a predetermined value; and supplying electric energy to said components which are crucial for allowing starting of said combustion engine by means of the start battery unit, during actuation of said start device.

By the provision of the above-mentioned method, there is provided a highly reliable way of ensuring that the vehicle can be started even if the above-mentioned second battery unit is completely discharged. Also, the method can be used by the driver alone, i.e. there is no need to call for an additional vehicle to help jump-starting the vehicle, as is previously known.

The start battery unit is charged, during operation of the vehicle, by means of electric energy from said second battery unit. This means that the start battery unit can be fully charged in this manner, so as to be used for supplying electric energy to said components which are crucial for allowing starting of said combustion engine.

A battery charging unit is used for supplying said energy to the above-mentioned crucial components and also configured for said charging of the start battery unit. The battery charging unit is reversed in the event that it is used for supplying electric energy to said components.

Charging of the second battery unit is inhibited during actuation of the start device. This means that a high amount of electric energy can be used for activating the crucial components, i.e. no energy is used unnecessarily for charging the second battery unit.

Inhibiting the charging of said second battery unit is carried out by controlling the voltage supplied by said start battery unit to a level which is below a predetermined limit value. If the voltage is sufficiently low, the second battery unit will not be charged and consequently no electric energy will be wasted by feeding it to the second battery unit during this phase, which is preferably during actuation of the start device.

According to a further aspect, the above-mentioned object is obtained by means of a power management system according to claim 4. Thus, there is provided a power management system in a vehicle operated by a combustion engine, said power management system comprising: a start battery unit for supplying electric energy to a start device for said combustion engine, a second battery unit for supplying electric energy to electric consumers of the vehicle including components which are crucial for allowing starting of said combustion engine; and an alternator for charging said second battery unit during operation of the combustion engine. Furthermore, the system comprises: means for checking whether the state of charge of said second battery unit is lower than a predetermined value, and input means for allowing actuation of said start device if the state of charge of said second battery unit is lower than said value and also if the state of charge of said start battery unit is higher than a predetermined value; and a battery charger for supplying electric energy from said start battery unit to said components which are crucial for allowing starting of said combustion engine, during said actuation of the start device.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.
Fig. 1 is schematic schedule of an embodiment of the invention.

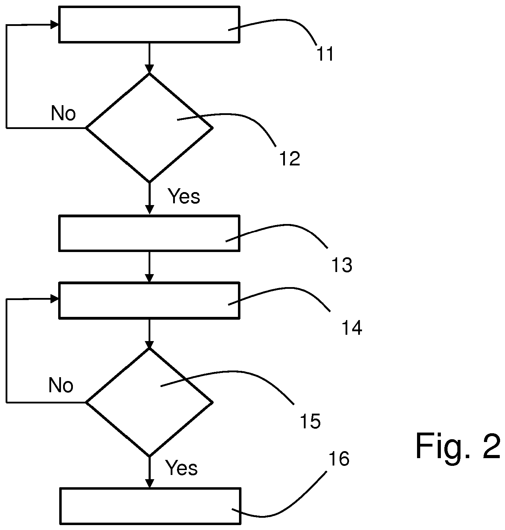

Fig. 2 is a flow chart showing a process for power management according to the invention.

### DETAILED DESCRIPTION OF EXAMPLE EMBODIMENTS OF THE INVENTION

Different aspects of the present disclosure will be described more fully hereinafter with reference to the enclosed drawings. The method and system disclosed herein can, however, be realized in many different forms and should not be construed as being limited to the aspects set forth herein.

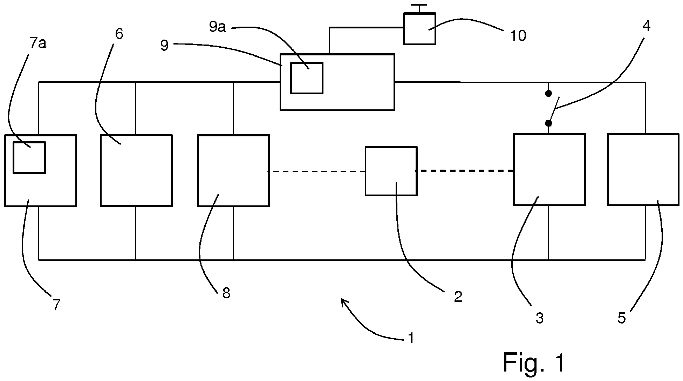

The invention will now be described with reference to an embodiment and the enclosed drawings. With initial reference to Fig. 1, there is shown a simplified schematic schedule of an embodiment of the invention. A power management system 1 is provided and is arranged in a vehicle, such as for example a heavy transport vehicle which is equipped with a combustion engine 2. The combustion engine 2 is associated with a start device 3, preferably in the form of a starter motor which is configured for starting the engine by cranking it in a conventional manner, i.e. upon actuation of a start switch 4 which is initiated by a driver of the vehicle.

The starter motor 3 is associated with a start battery unit 5 which is primarily configured for supplying electric energy to the starter motor 3. The vehicle is also provided with a second battery unit 6 which is primarily configured for supplying electric energy to a number of electric consumers in the vehicle, as symbolically indicated by means of reference numeral 7. It should be noted that these consumers 7 include a number of components which are crucial for starting of the combustion engine 2. These crucial components, which will be described in greater detail below, may for example comprise electronic control units for vehicle management and for engine control, and are indicated by means of reference numeral 7a in Fig. 1. It should be noted that these crucial components 7a must be supplied with electric power in order to allow starting of the engine 2.

Furthermore, the second battery unit 6 is charged during operation of the combustion engine 2 by means of an alternator 8 which is associated with the combustion engine 2 in a conventional manner.

According to the embodiment, the two battery units 5, 6 are of different type. The start battery unit 5 is optimized for delivering a high electric power during a short time, i.e. during cranking of the combustion engine 2. As an example, the start battery unit 5 may be subjected to current loads in the magnitude of 300-500 A during an engine starting sequence lasting approximately for a few seconds. In contrast, the second battery unit 6 is optimized for supplying a high amount of electric energy to a number of components which for example are associated with a living compartment of the vehicle, i.e. heating devices, ventilation devices, light devices etc. (not shown in detail in Fig. 1) which are necessary for allowing the driver of the vehicle to be comfortable while spending time in the living compartment.

An important purpose of the invention is to guarantee - in a system involving two separate battery units - that the combustion engine 2 can always be started, even in severe conditions in which the second battery unit 6 is completely discharged. Such a situation may occur for example when the electric components in the living compartment have been used for a long period of time. The situation may be affected in a negative direction if the outside temperature is low. Even if the start battery unit 5 is fully charged during such a situation, the vehicle cannot be started since the second battery unit 6 cannot supply any electric power to the crucial components 7a which are needed to start the engine 2.

The invention is configured for solving the above-mentioned problem situation and for securing that the combustion engine can be started in the event that the second battery unit 6 is drained. To this end, and according to an embodiment of the invention, a battery charger 9 is connected between the start battery unit 5 and the second battery unit 6, as shown in Fig. 1. During normal operation of the vehicle, the battery charger 9 is configured for charging the start battery unit 5 with the aid of the electric charge in the second battery unit 6, which is charged during operation of the engine 2 by means of the alternator 8.

This means that during normal operation of the vehicle 1, the alternator 8 will be supplying electric energy to charge the second battery unit 6. Also, electric energy will be supplied to the start battery unit 5 via the battery charger 9, in order to charge the start battery unit 5.

Furthermore, the battery charger 9 is associated with a manual actuator 10 which is configured so that, upon actuation, the battery charger 9 is reversed. The manual actuator 10 is suitably constituted by a push button or similar device. This reverse operation means that the start battery unit 5 can be used to supply electric energy to the crucial components 7a, while at the same time supplying power to the start device 3, in order to allow starting of the engine 2. To this end, the battery charger 9 comprises a power management control unit 9a to which the manual actuator 10 is connected. Furthermore, the control unit 9a is also arranged for detecting the voltage of both the start battery unit 5 and the second battery unit 6. The control unit 9a is also configured for determining the state of charge (SOC) of the start battery unit 5 and the second battery unit 6.

A typical situation in which the invention can be used will now described. It can be assumed that the vehicle is in a condition in which the second battery unit 6 is completely drained whereas the start battery unit 5 is sufficiently charged to be able to activate the start device 3. A driver who intends to use the vehicle will notice that the second battery unit 6 is discharged since all lights in the vehicle will be out and the engine will not respond to any starting attempts. In such case, the driver may actuate the manual actuator 10, which for this purpose may be located at a convenient location on the exterior of the vehicle.

According to an embodiment, the control unit 9a shown in Fig. 1 will detect that the manual actuator 10 is activated. At that stage, the control unit 9a will check whether the state of charge (SOC₁) of the second battery unit 6 is lower than a predetermined threshold value. This is suitably done before any attempt at starting the combustion engine 2 is made by the driver. This threshold value corresponds to a condition, i.e. with a certain state of charge, in which it cannot be used to actuate the crucial components 7a, i.e. it cannot be used to start the vehicle even if the start battery unit 5 can be used to actuate the start device 3.

If the above-mentioned condition is met, the control unit 9a is configured to await receipt of an input signal from the actuation device 10. This signal will then be accepted for allowing actuation of the start device 3, but only if the state of charge (SOC₂) of the start battery unit 5 is higher than a predetermined threshold value. This threshold value corresponds to a condition of the start battery unit 5 in which it can be used to actuate the start device 3 and also to power the electric components 7 including the above-mentioned crucial components 7a.

When the above-mentioned conditions regarding the state of charge (SOC) of the two battery units 5, 6 are met and the manual actuator 10 is actuated, preferably during a certain predetermined period of time such as a few seconds, the input signal from the actuator 10 is accepted and used for actuation of the battery charger 9 to actually supply electric energy to the crucial components 7a by means of the start battery unit 5. This can be done while the starter motor 3 is actuated in order to start the engine 2. In order to allow this, the operation of the battery charger 9 is reversed during this phase, i.e. it allows electric power to be fed from the start battery unit 5 and towards the components 7, 7a.

The electric power contained within the start battery unit 5 is at this stage sufficient in order to actuate the starter motor 3 and start the vehicle. It can also be expected that the electric power will also be sufficient to feed the components 7, 7a, since the electric energy needed for the components 7, 7a can be expected to be much lower that the corresponding need for the starter motor 3.

According to an embodiment, certain electrical components in the vehicle can be disconnected during the starting phase. In particular, the strategy for choosing which components to disconnected at this stage is based on based on a decision in the control unit 9a to minimize the number of active electrical components in order to guarantee that the crucial components 7a can be supplied with a sufficient amount of electric power.

Furthermore, in the above-mentioned situation in which the start battery unit 5 is used for powering the crucial components 5, it is advantageous if the second battery unit 6 is not charged. This is obtained by means of the control unit 9a which is configured for controlling the voltage from the battery charger 9. In a typical battery configuration, the second battery unit 6 has a nominal voltage of 24 V, but if the voltage is reduced to a threshold value which may be approximately 18 V, the second battery unit 6 will not be charged. The control unit 9a is configured for maintaining the output voltage of the battery charger 9 below such a threshold value. This means that the electric energy from the start battery unit 5 which is used for powering the crucial components 7a will not be reduced due to charging of the second battery unit 6, i.e. due to consumption of electric energy by the second battery unit 6. The charging current of a battery is dependent on the battery voltage and current state of charge (SOC) level of the battery. Below a certain voltage, the battery charging current acceptance is low. If the control unit's 9a operating voltage is lower than this charging acceptance voltage of the second battery unit 6, the system will self-balance, securing that the electric energy is fed to the above-mentioned crucial components so as to allow starting of the vehicle.

Fig. 3 is a flow chart describing the operation of the invention. An initial state of the power management system 1 is that the two above-mentioned conditions are met, i.e. the start battery unit 5 is charged sufficiently to allow starting of the start device 3 and the second battery unit 6 is drained of electric energy, i.e. discharged (see step 11 in Fig. 3). This means that the state of charge (SOC₁) of the second battery unit 6 is lower than a predetermined threshold value and the state of charge (SOC₂) of the start battery unit 5 is higher than a predetermined threshold value.

Next, the power management system 1 will wait for the manual actuator 10 (see Fig. 1) to be actuated by the driver of the vehicle (step 12). If this occurs, the battery charger 9 will enter a condition in which it is reversed (step 13) so that current is fed from the start battery unit 5 and to the consumers 7, 7a. As mentioned above, the system now enters a state in which charging of the second battery unit 6 is inhibited (step 13) so as to ensure that the crucial components 7a can be powered during a subsequent actuation of the start device 3.

Preferably, charging of said second battery unit 6 is inhibited by means of the control unit 9a which is configured for controlling the voltage supplied by said start battery unit 6 to a level which is below a predetermined limit value.

Furthermore, according to an embodiment, certain electric consumers are deactivated during a phase (step 14) in order to optimize the possibilities of powering the crucial components 7a during a during actuation of the start device 3.

Next, the system will await an attempt by the driver to actually start the engine 2, i.e. to activate the switch 4 so as to activate the starter motor 3 (step 15). As explained above, a high amount of electric energy is fed to the crucial components 7a, preferably without being drained of energy which is guided to the second battery unit 6. At this stage, it is only necessary to feed electric energy to the crucial components 7a so as to allow starting of the engine. The actual charging of the second battery unit 6 can be initiated later, when the engine 2 is running in a steady manner (step 16).

According to an embodiment, the method for managing power as described has a timer function in order to secure that the start battery is not drained, i.e. so that there is enough power to enable a start of the vehicle.

In summary, activating the manual actuator 10 allows the driver of the vehicle to use the start battery unit 5 to supply the electric components 7, 7a of the vehicle with power, enabling the crucial components 7a, i.e. including vehicle and engine control units, to be operated.

It is to be understood that the present invention is not limited to the embodiments described above and illustrated in the drawings; rather, the skilled person will recognize that many changes and modifications may be made within the scope of the appended claims.

## Claims

1. A method for controlling a power management system (1) in a vehicle operated by a combustion engine (2), wherein said system (1) comprises a control unit (9a), said method comprising:
- supplying electric energy to a start device (3) for said combustion engine by means of a start battery unit (5);
- supplying electric energy to a number of electric consumers (7) in the vehicle including components (7a) which are crucial for allowing starting of said combustion engine (2), by means of a second battery unit (6); and
- charging said second battery unit (6) during operation of the combustion engine (2) by means of an alternator (8) which is associated with said combustion engine (2);
- checking, before starting of the combustion engine (2) by means of said start device (3), whether the state of charge (SOC₁) of said second battery unit (6) is lower than a predetermined value, and, if this is the case,
- accepting an input signal for actuation of said start device (3) if the state of charge (SOC₂) of said start battery unit (5) is higher than a predetermined value; and
- during actuation of said start device (3), supplying electric energy to said crucial components (7a) from the start battery unit (5) by means of a battery charging unit (9) which is also configured for charging the start battery unit (5) during operation of the vehicle with electric energy from said second battery unit (6), said battery charging unit (9) being reversed for supplying electric energy from said start battery unit (5) to said crucial components (7a);
**characterized in that** said method further comprises:
- maintaining the voltage of the output of the battery charging unit (9), which voltage is delivered to said crucial components (7a) and to said second battery unit (6), below a charging acceptance voltage of said second battery unit (6), under which said second battery unit (6) can not be charged; and
- thereby inhibiting charging of said second battery unit (6) during actuation of the start device (3) while supplying electric energy to said crucial components (7a).

2. Method according to claim 1, further comprising:
- inhibiting operation of at least one of said electric consumers (7) during actuation of the start device (3).

3. Method according to any one of the preceding claims, further comprising:
- accepting said input signal for actuation of said start device (3) in the form of a signal from a manual switch (10).

4. A power management system (1) in a vehicle operated by a combustion engine (2), said power management system (1) comprising:
- a start battery unit (5) for supplying electric energy to a start device (3) for said combustion engine (2),
- a second battery unit (6) for supplying electric energy to electric consumers (7) of the vehicle including components (7a) which are crucial for allowing starting of said combustion engine (2); and
- an alternator (7) for charging said second battery unit (6) during operation of the combustion engine (2);
- means for checking whether the state of charge (SOC₁) of said second battery unit (6) is lower than a predetermined value, and
- input means (9a) for allowing actuation of said start device (3) if the state of charge (SOC₁) of said second battery unit (6) is lower than said value and also if the state of charge (SOC₂) of said start battery unit (5) is higher than a predetermined value; and
- a battery charger (9) for supplying electric energy from said start battery unit (5) to said crucial components (7a), during said actuation of the start device (3), wherein said battery charger (9) is configured for charging said start battery unit (5) during operation of the vehicle, using electric energy from said second battery unit (6), and wherein said battery charger (9) is configured for being reversed for supplying electric energy from said start battery unit (5) to said crucial components (7a),
**characterized in that** said system (1) comprises:
- a control unit (9a) which is configured for maintaining the voltage supplied from said start battery unit (5) by means of the battery charger (9), which voltage is delivered to said crucial components (7a) and to said second battery unit (6), below a charging acceptance voltage of said second battery unit (6), under which said second battery unit (6) can not be charged, thereby inhibit charging of said second battery unit (6) during actuation of the start device (3) while supplying electric energy to said crucial components (7a).

5. Power management system according to claim 4, wherein said input means (9a) is associated with a manual switch generating said input signal for actuation of said start device (3).

6. A vehicle comprising a system according to any one of claims 4-5.

7. A computer program comprising program code means for performing the steps of any of claims 1-3 when said program is run on the control unit (9a) of the power management system according to claim 4 or 5.

8. A computer readable medium having stored thereon the computer program of claim 7.

## Patentansprüche

1. Verfahren zum Steuern eines Leistungsverwaltungssystems (1) in einem Fahrzeug, das durch einen Verbrennungsmotor (2) betrieben wird, wobei das System (1) eine Steuereinheit (9a) umfasst, das Verfahren umfassend:
- Zuführen von elektrischer Energie zu einer Startvorrichtung (3) für den Verbrennungsmotor mittels einer Startbatterieeinheit (5);
- Zuführen von elektrischer Energie zu einer Anzahl von elektrischen Verbrauchern (7) in dem Fahrzeug, einschließlich Komponenten (7a), die für ein Ermöglichen eines Startens des Verbrennungsmotors (2) wesentlich sind, mittels einer zweiten Batterieeinheit (6); und
- Laden der zweiten Batterieeinheit (6) während des Betriebs des Verbrennungsmotors (2) mittels eines Wechselstromgenerators (8), der dem Verbrennungsmotor (2) zugeordnet ist;
- Prüfen, vor dem Starten des Verbrennungsmotors (2) mittels der Startvorrichtung (3), ob der Ladezustand (SOC₁) der zweiten Batterieeinheit (6) niedriger als ein vorbestimmter Wert ist, und, falls dies der Fall ist,
- Akzeptieren eines Eingangssignals für eine Betätigung der Startvorrichtung (3), falls der Ladezustand (SOC₂) der Startbatterieeinheit (5) höher als ein vorbestimmter Wert ist; und
- während der Betätigung der Startvorrichtung (3), Zuführen von elektrischer Energie zu den wesentlichen Komponenten (7a) von der Startbatterieeinheit (5) mittels einer Batterieladeeinheit (9), die auch zum Laden der Startbatterieeinheit (5) während des Betriebs des Fahrzeugs mit elektrischer Energie von der zweiten Batterieeinheit (6) konfiguriert ist, wobei die Batterieladeeinheit (9) zum Zuführen von elektrischer Energie zu der Startbatterieeinheit (5) zu den wesentlichen Komponenten (7a) umgekehrt wird;
**dadurch gekennzeichnet, dass** das Verfahren ferner umfasst:
- Aufrechterhalten der Spannung des Ausgangs der Batterieladeeinheit (9), wobei die Spannung an die wesentlichen Komponenten (7a) und an die zweite Batterieeinheit (6), unterhalb einer Ladeannahmespannung der zweiten Batterieeinheit (6), abgegeben wird, unter der die zweite Batterieeinheit (6) nicht geladen werden kann; und
- wodurch das Laden der zweiten Batterieeinheit (6) während der Betätigung der Startvorrichtung (3) verhindert wird, während elektrische Energie zu den wesentlichen Komponenten (7a) zugeführt wird.

2. Verfahren nach Anspruch 1, ferner umfassend:
- Verhindern des Betriebs mindestens eines der elektrischen Verbraucher (7) während der Betätigung der Startvorrichtung (3).

3. Verfahren nach einem der vorstehenden Ansprüche, ferner umfassend:
- Annehmen des Eingangssignals für die Betätigung der Startvorrichtung (3) in der Form eines Signals von einem manuellen Schalter (10).

4. Leistungsverwaltungssystem (1) in einem Fahrzeug, das durch einen Verbrennungsmotor (2) betrieben wird, das Leistungsverwaltungssystem (1) umfassend:
- eine Startbatterieeinheit (5) zum Zuführen von elektrischer Energie zu einer Startvorrichtung (3) für den Verbrennungsmotor (2),
- eine zweite Batterieeinheit (6) zum Zuführen von elektrischer Energie zu elektrischen Verbrauchern (7) des Fahrzeugs, einschließlich Komponenten (7a), die für das Ermöglichen des Startens des Verbrennungsmotors (2) wesentlich sind; und
- einen Wechselstromgenerator (7) zum Laden der zweiten Batterieeinheit (6) während des Betriebs des Verbrennungsmotors (2);
- Mittel zum Prüfen, ob der Ladezustand (SOC₁) der zweiten Batterieeinheit (6) niedriger als ein vorbestimmter Wert ist, und
- Eingabemittel (9a) zum Ermöglichen der Betätigung der Startvorrichtung (3), falls der Ladezustand (SOC₁) der zweiten Batterieeinheit (6) niedriger als der Wert ist und auch falls der Ladezustand (SOC₂) der Startbatterieeinheit (5) höher als ein vorbestimmter Wert ist; und
- ein Batterieladegerät (9) zum Zuführen von elektrischer Energie von der Startbatterieeinheit (5) zu den wesentlichen Komponenten (7a), während der Betätigung der Startvorrichtung (3), wobei das Batterieladegerät (9) zum Laden der Startbatterieeinheit (5) während des Betriebs des Fahrzeugs, unter Verwendung von elektrischer Energie von der zweiten Batterieeinheit (6), konfiguriert ist, und wobei das Batterieladegerät (9) konfiguriert ist, um umgekehrt zu werden, zum Zuführen von elektrischer Energie von der Startbatterieeinheit (5) zu den entscheidenden Komponenten (7a),
**dadurch gekennzeichnet, dass** das System (1) umfasst:
- eine Steuereinheit (9a), die konfiguriert ist zum Aufrechterhalten der Spannung, die von der Startbatterieeinheit (5) mittels des Batterieladegeräts (9) zugeführt wird, wobei die Spannung an die wesentlichen Komponenten (7a) und an die zweite Batterieeinheit (6) abgegeben wird, unterhalb einer Ladeannahmespannung der zweiten Batterieeinheit (6), unter der die zweite Batterieeinheit (6) nicht geladen werden kann, wodurch das Laden der zweiten Batterieeinheit (6) während der Betätigung der Startvorrichtung (3) verhindert wird, während elektrische Energie an die wesentlichen Komponenten (7a) zugeführt wird.

5. Leistungsverwaltungssystem nach Anspruch 4, wobei das Eingabemittel (9a) einem manuellen Schalter zugeordnet ist, der das Eingangssignal für die Betätigung der Startvorrichtung (3) erzeugt.

6. Fahrzeug, umfassend ein System nach einem der Ansprüche 4 bis 5.

7. Computerprogramm, umfassend Programmcodemittel zum Durchführen der Schritte nach einem der Ansprüche 1 bis 3, wenn das Programm auf der Steuereinheit (9a) des Leistungsverwaltungssystems nach Anspruch 4 oder 5 ausgeführt wird.

8. Computerlesbares Medium, das das Computerprogramm nach Anspruch 7 darauf gespeichert aufweist.

## Revendications

1. Procédé de commande d'un système de gestion d'énergie (1) dans un véhicule entraîné par un moteur à combustion (2), dans lequel ledit système (1) comprend une unité de commande (9a), ledit procédé comprenant :
- la fourniture d'énergie électrique à un dispositif de démarrage (3) pour ledit moteur à combustion au moyen d'une unité de batterie de démarrage (5) ;
- la fourniture d'énergie électrique à un nombre de consommateurs électriques (7) dans le véhicule comportant des composants (7a) qui sont essentiels pour permettre le démarrage dudit moteur à combustion (2), au moyen d'une seconde unité de batterie (6) ; et
- la charge de ladite seconde unité de batterie (6) pendant le fonctionnement du moteur à combustion (2) au moyen d'un alternateur (8) qui est associé audit moteur à combustion (2) ;
- le fait de vérifier, avant le démarrage du moteur à combustion (2) au moyen dudit dispositif de démarrage (3), si l'état de charge (SOC₁) de ladite seconde unité de batterie (6) est inférieur à une valeur prédéterminée, et, si tel est le cas,
- l'acceptation d'un signal d'entrée pour l'actionnement dudit dispositif de démarrage (3) si l'état de charge (SOC₂) de ladite unité de batterie de démarrage (5) est supérieur à une valeur prédéterminée ; et
- lors de l'actionnement dudit dispositif de démarrage (3), la fourniture d'énergie électrique auxdits composants essentiels (7a) à partir de l'unité de batterie de démarrage (5) au moyen d'une unité de charge de batterie (9) qui est également configurée pour charger l'unité de batterie de démarrage (5) pendant le fonctionnement du véhicule avec l'énergie électrique provenant de ladite seconde unité de batterie (6), ladite unité de charge de batterie (9) étant inversée pour fournir de l'énergie électrique à partir de ladite unité de batterie de démarrage (5) auxdits composants essentiels (7a) ;
**caractérisé en ce que** ledit procédé comprend en outre :
- le maintien de la tension de la sortie de l'unité de charge de batterie (9), laquelle tension est délivrée auxdits composants essentiels (7a) et à ladite seconde unité de batterie (6), en dessous d'une tension d'acceptation de charge de ladite seconde unité de batterie (6), au dessous de laquelle ladite seconde unité de batterie (6) ne peut pas être chargée ; et
- par conséquent, l'inhibition de la charge de ladite seconde unité de batterie (6) pendant l'actionnement du dispositif de démarrage (3) tout en fournissant de l'énergie électrique auxdits composants essentiels (7a).

2. Procédé selon la revendication 1, comprenant en outre :
- l'inhibition du fonctionnement d'au moins l'un desdits consommateurs électriques (7) pendant l'actionnement du dispositif de démarrage (3).

3. Procédé selon l'une quelconque des revendications précédentes, comprenant en outre :
- l'acceptation dudit signal d'entrée pour l'actionnement dudit dispositif de démarrage (3) sous la forme d'un signal provenant d'un commutateur manuel (10).

4. Système de gestion d'énergie (1) dans un véhicule entraîné par un moteur à combustion (2), ledit système de gestion d'énergie (1) comprenant :
- une unité de batterie de démarrage (5) pour fournir de l'énergie électrique à un dispositif de démarrage (3) pour ledit moteur à combustion (2),
- une seconde unité de batterie (6) pour fournir de l'énergie électrique à des consommateurs électriques (7) du véhicule comportant des composants (7a) qui sont essentiels pour permettre le démarrage dudit moteur à combustion (2) ; et
- un alternateur (7) pour charger ladite seconde unité de batterie (6) pendant le fonctionnement du moteur à combustion (2) ;
- un moyen pour vérifier si l'état de charge (SOC₁) de ladite seconde unité de batterie (6) est inférieur à une valeur prédéterminée, et
- un moyen d'entrée (9a) pour permettre l'actionnement dudit dispositif de démarrage (3) si l'état de charge (SOC₁) de ladite seconde unité de batterie (6) est inférieur à ladite valeur et également si l'état de charge (SOC₂) de ladite unité de batterie de démarrage (5) est supérieur à une valeur prédéterminée ; et
- un chargeur de batterie (9) pour fournir de l'énergie électrique à partir de ladite unité de batterie de démarrage (5) auxdits composants essentiels (7a), pendant ledit actionnement du dispositif de démarrage (3), dans lequel ledit chargeur de batterie (9) est configuré pour charger ladite unité de batterie de démarrage (5) pendant le fonctionnement du véhicule, à l'aide de l'énergie électrique provenant de ladite seconde unité de batterie (6), et dans lequel ledit chargeur de batterie (9) est configuré pour être inversé pour fournir de l'énergie électrique à partir de ladite unité de batterie de démarrage (5) auxdits composants essentiels (7a),
**caractérisé en ce que** ledit système (1) comprend :
- une unité de commande (9a) qui est configurée pour maintenir la tension fournie à partir de ladite unité de batterie de démarrage (5) au moyen du chargeur de batterie (9), laquelle tension est délivrée auxdits composants essentiels (7a) et à ladite seconde unité de batterie (6), en dessous d'une tension d'acceptation de charge de ladite seconde unité de batterie (6), en dessous de laquelle ladite seconde unité de batterie (6) ne peut pas être chargée, inhibant ainsi la charge de ladite seconde unité de batterie (6) pendant l'actionnement du dispositif de démarrage (3) tout en fournissant de l'énergie électrique auxdits composants essentiels (7a).

5. Système de gestion d'énergie selon la revendication 4, dans lequel ledit moyen d'entrée (9a) est associé à un commutateur manuel générant ledit signal d'entrée pour l'actionnement dudit dispositif de démarrage (3).

6. Véhicule comprenant un système selon l'une quelconque des revendications 4 à 5.

7. Programme informatique comprenant un moyen de code de programme pour effectuer les étapes selon l'une quelconque des revendications 1 à 3 lorsque ledit programme est exécuté sur l'unité de commande (9a) du système de gestion d'énergie selon la revendication 4 ou 5.

8. Support lisible par ordinateur sur lequel est stocké le programme informatique selon la revendication 7.
